# EUROPÄISCHE PATENTSCHRIFT

(11) **EP 2 095 336 B1**
(45) Veröffentlichungstag und Bekanntmachung des Hinweises auf die Patenterteilung: **07.06.2017**
(21) Anmeldenummer: 07819667.2
(22) Anmeldetag: 07.11.2007
(51) Int. Cl.: G07C 3/00, G05B 23/00, B05B 15/00, G05B 23/02

(54) **FEHLERPROTOKOLLIERUNGSVERFAHREN FÜR EINE BESCHICHTUNGSANLAGE**
ERROR LOGGING METHOD FOR A COATING PLANT
PROCÉDÉ DE CONSIGNATION DES ERREURS POUR UNE INSTALLATION DE REVÊTEMENT

(30) Priorität: 01.12.2006 DE 102006056879
(43) Veröffentlichungstag der Anmeldung: 02.09.2009
(73) Patentinhaber: Dürr Systems AG, 74321 Bietigheim-Bissingen (DE)
(72) Erfinder: HERRE, Frank, 71739 Oberriexingen (DE); WILDERMUTH, Dietmar, 70193 Stuttgart (DE); WOLF, Roland, 71088 Holzgerlingen (DE)
(74) Vertreter: Heusler, Wolfgang
(86) Internationale Anmeldenummer: PCT/EP2007/009657
(87) Internationale Veröffentlichungsnummer: WO 2008/064763

(56) Entgegenhaltungen:
- WO-A-03/067350
- DE-A1- 10 007 972
- DE-A1- 10 036 741
- DE-A1-102005 024 010

## Beschreibung

Die Erfindung betrifft ein Fehlerprotokollierungsverfahren für eine Beschichtungsanlage gemäß dem Hauptanspruch.

In Lackieranlagen zur Lackierung von Kraftfahrzeugkarosserieteilen fällt im Betrieb eine Vielzahl von Prozessdaten an, wie beispielsweise die aktuelle Roboterstellung der Applikations- und Lackierroboter, die Drehzahl der Rotationszerstäuber, die elektrische Aufladespannung der elektrostatischen Applikationsgeräte oder die Ausflussmenge der einzelnen Medien (z.B. Lack, Lenkluft), um nur einige Prozessdaten zu nennen. Eine Protokollierung der im laufenden Betrieb der Lackieranlage anfallenden Prozessdaten ermöglicht bei einer fehlerbedingten Betriebsstörung der Lackieranlage eine Fehleranalyse anhand der gespeicherten Prozessdaten.

Zum Einen wird zur Protokollierung der Prozessdaten das sogenannte Primas-System eingesetzt, bei dem die im laufenden Betrieb der Lackieranlage anfallenden Prozessdaten permanent und zeitlich unbegrenzt in einen externen Massenspeicher geschrieben werden, der beim Betreiber der Lackieranlage installiert ist. Nachteilig an diesem Primas-System ist zunächst der große Speicherbedarf für die Speicherung der Prozessdaten. Ein weiterer Nachteil des Primas-System ist die Tatsache, dass die einzelnen Prozessdaten zeitlich unsynchronisiert gemessen werden und dementsprechend auch zeitlich unsynchronisiert abgespeichert werden. Beispielsweise kann die Robotersteuerung der Lackier- und Applikationsroboter eine geringfügig andere Systemzeit aufweisen als die Steuereinheit für den Transportförderer, der die zu lackierenden Kraftfahrzeugkarosserieteile durch die Lackieranlage fördert. Dieser zeitliche Synchronisierungsfehler erschwert die spätere Fehleranalyse anhand der gespeicherten Prozessdaten, da keine exakte zeitliche Zuordnung der Prozessdaten möglich ist.

Zum Anderen erfolgt die Protokollierung der anfallenden Prozessdaten in der Praxis durch das sogenannte Softlog-System oder mittels Datenschreibern. Dabei müssen jedoch vor der Aufzeichnung zunächst die zu protokollierenden Prozessdaten definiert werden, die dann jeweils einen Kanal bilden. Bei der Protokollierung mittels Datenschreibern ist es sogar erforderlich, vor der Aufzeichnung eine Verkabelung vorzunehmen, wobei die Anzahl der Signale und der aufzuzeichnenden Prozessdaten begrenzt ist. Diese Systeme werden meist nur zur Fehlersuche bei Serienfehlern eingesetzt und sind nicht in jeder Lackieranlage vorhanden. Darüber hinaus ist die Zeitdauer der Aufzeichnung und die Anzahl der Aufzeichnungskanäle hierbei begrenzt.

Gemeinsam ist dem Primas-System und dem Softlog-System der Nachteil, dass die Aufzeichnung der anfallenden Prozessdaten unabhängig von einem Fehler der Lackieranlage erfolgt.

Weiterhin haben das Primas-System und das Softlog-System den Nachteil gemeinsam, dass sporadische Fehler nur mit hohem Aufwand analysiert werden können, wobei die Zeit zur Fehlerfindung sehr groß ist.

Aus DE 32 24 586 A1 ist ein Betriebsdatenerfassungsverfahren bekannt, das beispielsweise in der Automobilindustrie eingesetzt werden kann. Hierbei werden die anfallenden Betriebsdaten laufend in einen Speicher geschrieben. Bei einer anschließenden Auswertung eines Aufzeichnungszeitraums können dann die angefallenen und gespeicherten Betriebsdaten auf einem Bildschirm analysiert werden. Wie bei dem vorstehend erwähnten bekannten Primas-System ist also hier ein großer Speicherbedarf vorhanden. Darüber hinaus ist auch hierbei die Fehleranalyse schwierig, da die Zuordnung der Betriebsdaten zu einem Fehler schwierig ist.

Aus DE 100 36 741 A1 ist ein Verfahren zur Kontrolle der Beschichtungsqualität in einer Lackieranlage bekannt, wobei zu jedem Werkstück zum Zeitpunkt der Beschichtung in einer Datenbank alle etwaigen Fehler gespeichert werden können. Die Speicherung erfolgt hierbei in der Datenbank also werkstückbezogen und nicht fehlerbezogen. Darüber hinaus enthält die Datenbank hierbei eine Vielzahl von Fehlern, die während des Beschichtungszeitraums aufgetreten sind, was die Fehleranalyse erschwert.

Ferner ist aus WO 02/013015 A1 ein System zur Ermittlung von Fehlerursachen bekannt, das beispielsweise in Warmwalzanlagen eingesetzt werden soll. Auch hierbei ist jedoch die Zuordnung eines aufgetretenen Fehlers zu den zugehörigen Prozessdatensätzen schwierig.

Weiterhin ist zum Stand der Technik hinzuweisen auf DE 10 2005 024010 A1.

Schließlich offenbart WO 03/067350 A ein Fehlerprotokollierungsverfahren gemäß dem Oberbegriff von Anspruch 1. Dieses bekannte Fehlerprotokollierungsverfahren eignet sich jedoch nicht für eine Fehlerprotokollierung und Fehleranalyse in einer Beschichtungsanlage.

Der Erfindung liegt deshalb die Aufgabe zugrunde, die vorstehend beschriebenen Fehlerprotokollierungsverfahren entsprechend zu verbessern.

Diese Aufgabe wird durch ein erfindungsgemäßes Fehlerprotokollierungsverfahren gemäß dem Hauptanspruch gelöst.

Im Rahmen der Erfindung erfolgt im Betrieb einer Beschichtungsanlage laufend eine Erfassung von Prozessdatensätzen der Beschichtungsanlage, wobei die einzelnen Prozessdatensätze jeweils bestimmten Betriebszeitpunkten der Beschichtungsanlage zugeordnet sind und jeweils mehrere Prozessdaten der Beschichtungsanlage enthalten.

Die erfassten Prozessdatensätze werden dann laufend gespeichert, um eine spätere Fehleranalyse anhand der gespeicherten Prozessdatensätze zu ermöglichen.

Weiterhin sieht die Erfindung vor, dass im Betrieb der Beschichtungsanlage eine Fehlerdetektion erfolgt, um eine Betriebsstörung der Beschichtungsanlage zu erkennen, wobei die Fehlerdetektion auf verschiedene Arten erfolgen kann, wie später noch detailliert beschrieben wird.

In Abhängigkeit von der Fehlerdetektion wird dann eine Fehlerkennung erzeugt, die verschiedene Informationen enthalten kann, wie ebenfalls später noch detailliert beschrieben wird.

Die Erfindung sieht zusätzlich zu den vorstehend genannten und aus dem Stand der Technik bekannten Verfahrensschritten vor, dass die Fehlerkennung in einer zeitlichen Synchronisierung mit den gespeicherten Prozessdatensätzen gespeichert wird. Dies ermöglicht bei einer späteren Fehleranalyse anhand der gespeicherten Prozessdatensätze und der ebenfalls gespeicherten Fehlerkennung eine exakte zeitliche Zuordnung des Fehlerzeitpunkts zu den zeitlichen Verläufen der gespeicherten Prozessdaten, was die Fehleranalyse erheblich erleichtert.

Der im Rahmen der Erfindung verwendete Begriff einer laufenden Erfassung der Prozessdatensätze hat vorzugsweise die Bedeutung, dass die Prozessdatensätze während des normalen Beschichtungsbetriebs erfasst werden, also ohne eine Unterbrechung des Beschichtungsbetriebs. Die Erfassung der Prozessdatensätze kann wahlweise kontinuierlich oder diskontinuierlich erfolgen, d.h. mit einer bestimmten Abtastrate. Vorzugsweise gilt das gleiche sinngemäß für die Speicherung der erfassten Prozessdatensätze sowie für die Fehlerdetektion und die Speicherung der Fehlerkennung.

Vorzugsweise werden die im Betrieb der Beschichtungsanlage laufend anfallenden Prozessdatensätze zunächst in einem Zwischenspeicher zwischengespeichert, wobei es sich beispielsweise um einen Ringspeicher handeln kann, in dem die anfallenden Prozessdatensätze kontinuierlich in einem gewissen Zeitraum gespeichert und anschließend wieder überschrieben werden, um den Speicherplatz für neue Prozessdatensätze freizugeben. Beispielsweise kann ein derartiger Ringspeicher eine Aufzeichnungsdauer zwischen 10 Sekunden und einigen Stunden oder Tagen aufweisen.

Bei einer Fehlerdetektion werden dann aus dem Zwischenspeicher diejenigen zwischengespeicherten Prozessdatensätze ausgewählt, die innerhalb einer vorgegebenen zeitlichen Vorlaufzeit vor der Detektion des Fehlerzustands und/oder innerhalb einer vorgegebenen zeitlichen Nachlaufzeit nach der Detektion des Fehlerzustands ermittelt wurden, da diese Prozessdatensätze für eine Fehleranalyse relevant sind, wohingegen früher oder später angefallene Prozessdatensätze in der Regel keinen Rückschluss auf den Fehler zulassen. Erfindungsgemäß werden bei einem Fehler also nur diejenigen Prozessdatensätze für eine spätere Fehleranalyse gespeichert, die innerhalb eines bestimmten Zeitfensters um den Fehlerzeitpunkt erfast wurden.

Die auf die vorstehend beschriebene Weise ausgewählten fehlerrelevanten Prozessdatensätze werden dann vorzugsweise zusammen mit der Fehlerkennung in einem Fehlerspeicher abgespeichert, um eine spätere Fehleranalyse zu ermöglichen.

Vorzugsweise werden hierbei für jeden Fehlerzustand der Beschichtungsanlage die einzelnen Fehlerkennungen mit den zugehörigen Prozessdatensätzen jeweils in eine eigene Fehlerdatei gespeichert. Zum Einen bietet dies den Vorteil, dass die einzelnen Fehlerdateien nur diejenigen Daten enthalten, die für die Analyse des jeweiligen Fehlers relevant sind, was die Fehleranalyse aufgrund der besseren Übersichtlichkeit erleichtert. Zum Anderen ermöglicht die Zuordnung der einzelnen Fehler zu jeweils einer einzigen Fehlerdatei eine optimale Fehleranalyse durch jeweils einen fehlerspezifischen Spezialisten. Beispielsweise kann eine Fehlerdatei, die aus einem Fehler der Applikationstechnik resultiert, von einem Spezialisten für Applikationstechnik analysiert werden, wobei die Fehlerdatei beispielsweise auch per E-Mail zu dem jeweiligen Spezialisten übertragen werden kann. Eine Fehlerdatei, die von einer Störung der Fördertechnik herrührt, kann dagegen von einem Spezialisten für die Fördertechnik analysiert werden.

Bei der Fehlerkennung kann es sich im einfachsten Fall um eine Zeitmarke handeln, die lediglich den Fehlerzeitpunkt wiedergibt, um eine zeitliche Zuordnung des Fehlerzeitpunkts zu den zeitlichen Verläufen der Prozessdaten zu ermöglichen. Es besteht jedoch auch die Möglichkeit, dass die Fehlerkennung den Typ des detektierten Fehlers wiedergibt. Beispielsweise können die verschiedenen Betriebsstörungen einer Beschichtungsanlage klassifiziert werden in Fehler der Fördertechnik, Fehler der Applikationstechnik oder Hochspannungsfehler, um nur einige zu nennen. Darüber hinaus kann der Fehlertyp auch angeben, welche Prozessdaten den vorgegebenen zulässigen Wertebereich verlassen haben.

Bei der vorstehend erwähnten Auswahl der zwischengespeicherten Prozessdatensätze innerhalb einer vorgegebenen Vorlauf- bzw. Nachlaufzeit ist die Vorlauf- bzw. Nachlaufzeit eine vorgegebene Zeitspanne, innerhalb derer eine vorgegebene Anzahl von Bauteilträgern ("Skids") oder zu beschichtenden Bauteilen durch die Beschichtungsanlage gefördert wird.

Erfindungsgemäß erfolgt die Speicherung der Prozessdatensätze und der Fehlererkennung mit einer zeitlichen Auflösung von mindestens 10ms, was aufgrund des hochdynamischen Betriebs moderner Beschichtungsanlagen für eine effiziente Fehleranalyse sinnvoll ist.

Hinsichtlich der zu erfassenden und zu speichernden Prozessdaten der Beschichtungsanlage besteht eine Vielzahl von Möglichkeiten, von denen einige nachfolgend beschrieben werden.

Beispielsweise kann es sich bei den Prozessdaten um Bauteildaten handeln, welche die zu beschichtenden Bauteile charakterisieren. So können die gespeicherten Bauteildaten angeben, ob zu einem bestimmten Zeitpunkt eine Karosserie eines Kleinwagens, eines Kompaktwagens, eines Kombis oder einer Luxuslimousine lackiert wird.

Darüber hinaus können als Prozessdaten auch Bedienerdaten erfasst und gespeichert werden, welche die Interaktion einer Bedienungsperson mit der Beschichtungsanlage charakterisieren. Beispielsweise können die Bedienerdaten sämtliche Eingaben (z.B. Tastatureingaben, Schalterbetätigungen, etc.) der einzelnen Bedienungspersonen umfassen, um später Bedienungsfehler erkennen und individuell zuordnen zu können. Darüber hinaus können die Bedienerdaten auch Ausgaben (z.B. Bildschirmausgaben, Warnsignale, etc.) der Beschichtungsanlage umfassen, die von den Bedienungspersonen wahrgenommen werden konnten. Auf diese Weise lässt sich bei der späteren Fehleranalyse überprüfen, ob die Bedienungspersonen möglicherweise Warnmeldungen der Beschichtungsanlage ignoriert haben.

Vorzugsweise werden als Prozessdaten auch Anlagendaten ermittelt und gespeichert, welche das Betriebsverhalten der Beschichtungsanlage selbst charakterisieren. Als Anlagendaten kommt eine Vielzahl von Daten in Frage, die in einer Beschichtungsanlage anfallen und nachfolgend beispielhaft erläutert werden.

So können die als Prozessdaten gespeicherten Anlagendaten der Beschichtungsanlage beispielsweise angeben, welche Farbe aktuell in der Beschichtungsanlage appliziert wird und/oder welche Farbe zuvor in der Beschichtungsanlage appliziert wurde. Auf diese Weise kann bei der späteren Fehleranalyse überprüft werden, ob bestimmte Farben oder bestimmte zeitliche Farbfolgen Probleme verursachen.

Ferner können die als Prozessdaten gespeicherten Anlagendaten jeweils eine Identifikationsnummer des aktuell in der Beschichtungsanlage befindlichen Bauteilträgers ("Skids") enthalten. Auf diese Weise kann bei der späteren Fehleranalyse überprüft werden, ob bestimmte Bauteilträger im Betrieb Probleme verursachen.

Darüber hinaus kann jeweils die Identifikationsnummer des aktuell in der Beschichtungsanlage befindlichen Bauteils aufgezeichnet werden, so dass es bei der späteren Fehleranalyse möglich ist, einen auftretenden Fehler einem bestimmten Bauteil zuzuordnen, das möglicherweise Spezifikationsabweichungen aufweist und deshalb den Fehler verursacht hat.

Weiterhin kann eine Identifikationsnummer gespeichert werden, welche die aktuell verwendete Ringleitung der Beschichtungsanlage kennzeichnet. Auf diese Weise kann bei der späteren Fehleranalyse erkannt werden, wenn bestimmte Ringleitungen Fehler verursachen, beispielsweise aufgrund einer veränderten Viskosität oder durch Druckabweichungen. Eine theoretisch mögliche Fehlerursache besteht auch in einer Verstopfung einer Ringleitung.

Von besonderem Interesse als Prozessdaten der Beschichtungsanlage sind weiterhin die Drehzahl eines Rotationszerstäubers, die elektrische Aufladungsspannung eines elektrostatischen Applikationsgeräts, die aktuell applizierte Beschichtungsmittelmenge, die Ausflussmenge anderer Medien (z.B. Lenkluft, Hornluft, Antriebsluft, etc.) sowie der Druck der verschiedenen Medien (z.B. Lack, Luft, Spülmittel, etc.).

Bei einer gemolchten Leitungsanordnung kann weiterhin die jeweilige Molchposition erfasst und gespeichert werden, um molchspezifische Betriebsstörungen der Beschichtungsanlage erkennen zu können.

Weiterhin können als Prozessdaten die Temperatur in der Beschichtungsanlage, die Füllstände der Beschichtungsanlage und die Schaltstellungen von Ventilen der Beschichtungsanlage erfasst und gespeichert werden.

Von besonderem Interesse für eine spätere Fehleranalyse ist auch die Position, die Stellung, die Geschwindigkeit, die Beschleunigung und/oder das Drehmoment eines Lackier- bzw. Applikationsroboters, die deshalb vorzugsweise ebenfalls als Prozessdaten erfasst und gespeichert werden.

Darüber hinaus können als Prozessdaten auch die Soll/Ist-Abweichungen einer oder mehrerer der vorstehend erwähnten Prozessdaten erfasst und gespeichert werden.

Die Erfindung ist jedoch hinsichtlich der zu erfassenden und zu speichernden Prozessdaten nicht auf die vorstehend genannten Beispiele beschränkt, sondern auch mit anderen Prozessdaten realisierbar.

In einer Variante der Erfindung werden die ermittelten Prozessdatensätze und/oder die Fehlerkennung mittels Datenfernübertragung zu einem Wartungsdienst übertragen, der sich beispielsweise beim Hersteller der jeweiligen Beschichtungsanlage befinden kann und deshalb über Spezialkenntnisse verfügt, welche die Fehleranalyse erleichtern. Beispielsweise können hierbei die Rohdaten der Datenfernübertragung zu dem Wartungsdienst übertragen werden, so dass sowohl die Zwischenspeicherung als auch die Auswahl und die zeitlich synchronisierte Speicherung bei dem Wartungsdienst erfolgen. Vorzugsweise erfolgt die Zwischenspeicherung und die Auswahl der fehlerrelevanten Prozessdaten dagegen bei dem Betreiber der Beschichtungsanlage, so dass nur die vorstehend erwähnte Fehlerdatei zu dem Wartungsdienst übertragen wird.

Anstelle einer Datenfernübertragung besteht natürlich im Rahmen der Erfindung auch die Möglichkeit, die Prozessdaten bzw. die Fehlerdatei auf einem Speichermedium (z.B. Diskette, Speicher-Stick) zu dem Wartungsdienst zu transportieren.

Weiterhin ist zu erwähnen, dass die Fehlerdetektion im Rahmen des erfindungsgemäßen Fehlerprotokollierungsverfahrens auf verschiedene Weise erfolgen kann. In einer Variante der Erfindung erfolgt die Fehlerdetektion rechnergesteuert anhand einer automatischen Auswertung der erfassten Prozessdatensätze der Beschichtungsanlage. Im Rahmen dieser Auswertung kann beispielsweise überprüft werden, ob die einzelnen Prozessdaten vorgegebene Wertebereiche überschreiten, was dann als Fehler detektiert wird. In einer anderen Variante der Erfindung erfolgt die Fehlerdetektion dagegen bedienergesteuert durch eine Bedienungsperson, indem die Bedienungsperson beispielsweise einen Not-Aus-Schalter betätigt. Die beiden vorstehend genannten Varianten zur Fehlerdetektion können im Rahmen der Erfindung auch miteinander kombiniert werden.

Im Rahmen der vorstehend erwähnten rechnergesteuerten Fehlerdetektion anhand einer Auswertung der erfassten Prozessdatensätze können die zeitlichen Verläufe der ermittelten Prozessdatensätze mit vorgegebenen Fehlerverläufen verglichen werden. Beispielsweise kann dann ein Fehler detektiert werden, wenn die Prozessdaten einen bestimmten zeitlichen Verlauf aufweisen.

Vorzugsweise erfolgt im Rahmen des erfindungsgemäßen Fehlerprotokollierungsverfahrens nicht nur eine Erfassung und selektive Speicherung der Prozessdatensätze, sondern auch eine optische Darstellung, um eine Fehleranalyse durch eine Bedienungsperson zu erleichtern. Die optische Darstellung der Prozessdatensätze erfolgt hierbei vorzugsweise in zeitlicher Synchronisation mit der zugehörigen Fehlerkennung in grafischer Form auf einem Bildschirm. Beispielweise können auf dem Bildschirm übereinander die zeitlichen Verläufe verschiedener Prozessdaten in zeitlicher Synchronisierung dargestellt werden, wobei auf dem Bildschirm eine Fehlerkennung angezeigt wird, die den exakten Fehlerzeitpunkt angibt. Darüber hinaus kann bei der optischen Darstellung auch die Position der Applikations- und Lackierroboter im Fehlerzeitpunkt dargestellt werden, indem die Applikations- und Lackierroboter perspektivisch dargestellt werden.

Weiterhin ist in einem bevorzugten Ausführungsbeispiel der Erfindung vorgesehen, dass bei einer Fehlerdetektion eine rechnergesteuerte Bestimmung möglicher Fehlerursachen und/oder Abhilfemaßnahmen erfolgt, indem die gespeicherte Fehlerkennung und die zugehörigen Prozessdatensätze analysiert werden. Die ermittelten Fehlerursachen bzw. Abhilfemaßnahmen können dann auf dem Bildschirm optisch dargestellt werden, um bei der Fehleranalyse erste Anhaltspunkte zu geben.

Ferner ist in einer Variante der Erfindung vorgesehen, dass bei einer Fehlerdetektion die Fehlerdetektion für einen vorgegebenen Zeitraum nach der Fehlerdetektion unterdrückt wird, um Folgefehler zu ignorieren.

Schließlich ist zu erwähnen, dass die Erfindung nicht nur das vorstehend beschriebene erfindungsgemäße Fehlerprotokollierungsverfahren als solches umfasst, sondern auch ein Datenspeichermedium mit einem darauf gespeicherten Computerprogramm zur Ausführung dieses Fehlerprotokollierungsverfahrens, wenn das Computerprogramm in einen entsprechenden Computer bzw. Steuerrechner geladen ist.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:

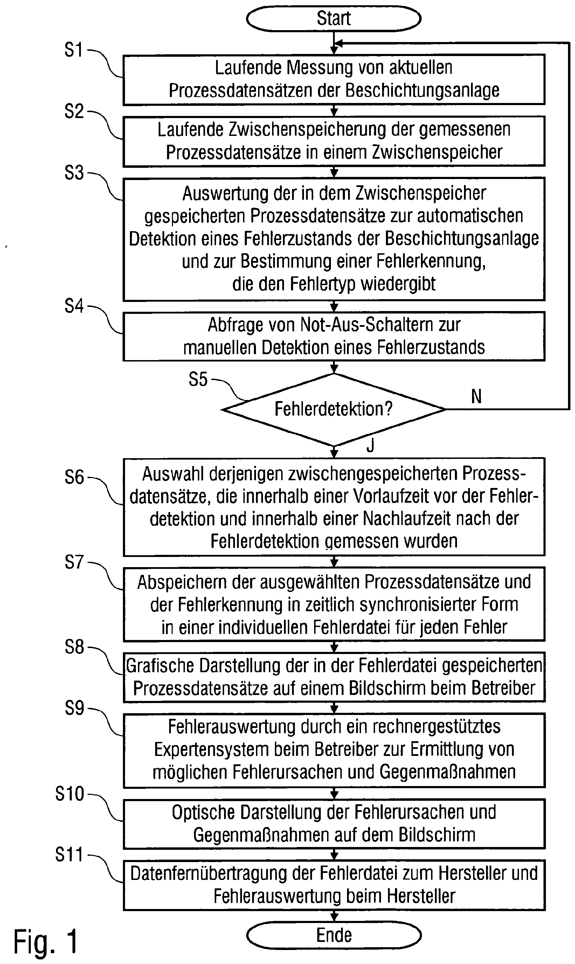

- Figur 1: das erfindungsgemäße Fehlerprotokollierungsverfahren in Form eines Flussdiagramms sowie
- Figur 2: einen Bildschirmausdruck mit einer Fehlerkennung und zeitlich synchronisierten Prozessdatenverläufen.

Im Folgenden wird nun unter Bezugnahme auf die Zeichnungen ein bevorzugtes Ausführungsbeispiel des erfindungsgemäßen Fehlerprotokollierungsverfahrens beschrieben.

In einem ersten Schritt S1 erfolgt eine laufende Messung von aktuellen Prozessdatensätzen der Beschichtungsanlage, wobei die einzelnen Prozessdatensätze jeweils eine Vielzahl von Prozessdaten der Beschichtungsanlage enthalten, wie beispielsweise die Ausflussmenge der einzelnen Medien (z.B. Lack, Lenkluft, Antriebsluft, etc.), die Drehzahl eines Rotationszerstäubers oder bauteilspezifische Daten, wie beispielsweise den Typ des aktuell lackierten Bauteils.

In einem weiteren Schritt S2 werden die gemessenen Prozessdatensätze dann in einem Zwischenspeicher zwischengespeichert, wobei es sich um einen Ringspeicher handelt, der beispielsweise eine Aufnahmezeit von einer Stunde oder mehreren Tagen aufweisen kann, so dass die Prozessdaten in dem Ringspeicher zyklisch überschrieben werden.

In einem weiteren Schritt S3 erfolgt dann eine Auswertung der in dem Zwischenspeicher gespeicherten Prozessdatensätze zur Detektion eines Fehlerzustands der Beschichtungsanlage und zur Bestimmung einer Fehlerkennung, die den Fehlertyp wiedergibt. Die Auswertung der in dem Zwischenspeicher gespeicherten Prozessdatensätze erfolgt im einfachsten Fall durch Vergleich der aktuellen Werte der Prozessdaten mit vorgegebenen Grenzwerten, so dass bei einer Grenzwertüberschreitung eine Fehlerdetektion erfolgt. Die Fehlerkennung kann dann im einfachsten Fall die Prozessdaten identifizieren, die den zulässigen Wertebereich verlassen haben.

Darüber hinaus erfolgt in einem Schritt S4 eine Abfrage von Not-Aus-Schaltern der Beschichtungsanlage zur Detektion eines Fehlerzustands, wobei eine manuelle Betätigung des Not-Aus-Schalters durch eine Bedienungsperson einen Fehlerzustand anzeigt. Hierbei wird in Abhängigkeit von der Identifikationsnummer des betätigten Not-Aus-Schalters eine zugehörige Fehlerkennung generiert.

In einem weiteren Schritt S5 wird dann während des laufenden Betriebs der Beschichtungsanlage überprüft, ob ein Fehler detektiert wurde. Falls dies nicht der Fall ist, so wird der Betrieb der Beschichtungsanlage mit der laufenden Messung und Zwischenspeicherung der Prozessdatensätze fortgesetzt. Im Falle einer Fehlerdetektion werden dagegen in einem weiteren Schritt S6 diejenigen zwischengespeicherten Prozessdatensätze aus dem Zwischenspeicher ausgewählt, die innerhalb einer vorgegebenen Vorlaufzeit vor der Fehlerdetektion und innerhalb einer vorgegebenen Nachlaufzeit nach der Fehlerdetektion gemessen wurden. Die Vorlaufzeit und die Nachlaufzeit sind hierbei Zeitspannen, in denen eine bestimmte Anzahl von Skids bzw. Bauteilen durch die Anlage gefördert wird.

Die in dem Schritt S6 ausgewählten fehlerrelevanten Prozessdatensätze werden dann in einem weiteren Schritt S7 zusammen mit der zugehörigen Fehlerkennung in zeitlich synchronisierter Form in einer individuellen Fehlerdatei für jeden Fehler abgespeichert.

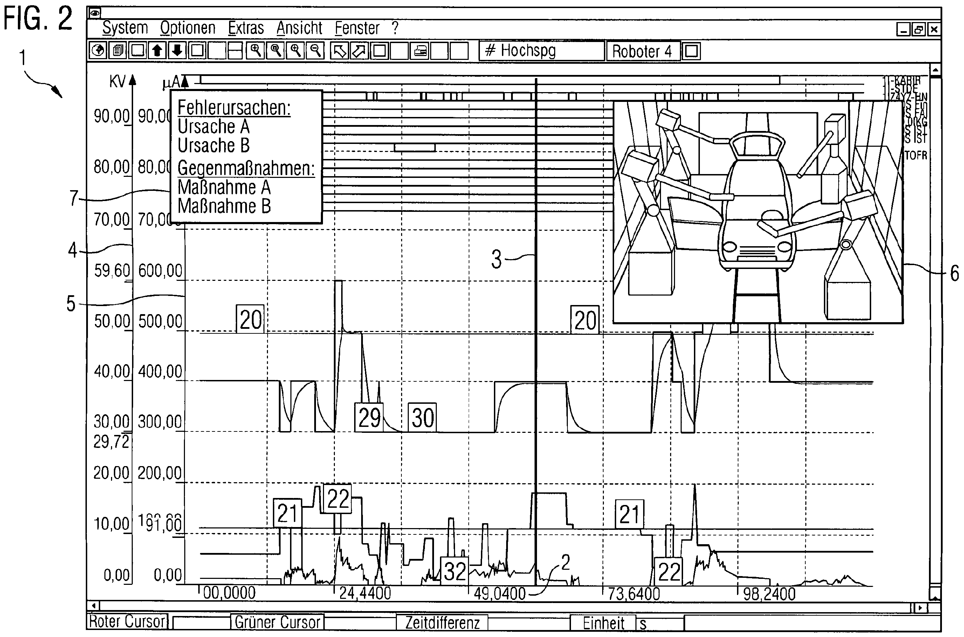

In einem weiteren Schritt S8 erfolgt dann eine grafische Darstellung der in der Fehlerdatei gespeicherten Prozessdatensätze auf einem Bildschirm beim Betreiber der Beschichtungsanlage, wie in Figur 2 exemplarisch dargestellt ist und nachfolgend beschrieben wird.

So zeigt Figur 2 einen Bildschirmausdruck 1 mit zeitlichen Verläufen 20, 21, 22, 29, 30, 32 von mehreren verschiedenen Prozessdaten, wobei die zeitlichen Verläufe 20, 21, 22, 29, 30, 32 in zeitlich synchronisierter Form übereinander über einer gemeinsamen Zeitachse 2 dargestellt werden, was eine exakte zeitliche Zuordnung der einzelnen zeitlichen Verläufe 20, 21, 22, 29, 30, 32 relativ zueinander ermöglicht.

Darüber hinaus ist in dem Bildschirm eine Fehlerkennung 3 dargestellt, die den exakten Fehlerzeitpunkt angibt und somit eine intuitive zeitliche Zuordnung zu den dargestellten Prozessdaten ermöglicht.

Weiterhin sind auf dem Bildschirm mehrere Parameterachsen 4, 5 für die verschiedenen Prozessdaten abgebildet, wobei die Parameterachse 4 beispielsweise die Hochspannung eines elektrostatischen Rotationszerstäubers in kV angibt, während die Parameterachse 5 den elektrischen Strom in µA angibt. Der Benutzer kann jedoch andere Parameterachsen ein- bzw. ausblenden. Das Gleiche gilt auch für die Auswahl der auf dem Bildschirm dargestellten Prozessdaten, so dass der Benutzer in einfacher Weise diejenigen Prozessdaten auswählen und auf dem Bildschirm anzeigen lassen kann, die für eine Fehleranalyse wichtig sind.

Darüber hinaus ist auf dem Bildschirm ein Fenster 6 dargestellt, in dem die räumliche Lage der einzelnen Applikations- bzw. Handhabungsroboter in einer Perspektivansicht dargestellt ist, um eine intuitive Fehlererkennung zu ermöglichen.

Nach dem Schritt S8 erfolgt in einem weiteren Schritt S9 eine Fehlerauswertung durch ein rechnergestütztes Expertensystem beim Betreiber der Lackieranlage zur Ermittlung von möglichen Fehlerursachen und Gegenmaßnahmen, die dann in einem Schritt S10 in einem Fenster 7 auf dem Bildschirm dargestellt werden. In einem weiteren Schritt S11 erfolgt dann eine Datenfernübertragung der Fehlerdatei vom Betreiber der Lackieranlage zum Hersteller der Lackieranlage, wo dann eine Fehlerauswertung durch Spezialisten des Herstellers erfolgen kann.

Die Erfindung ist nicht auf das vorstehend beschriebene Ausführungsbeispiel beschränkt. Vielmehr ist eine Vielzahl von Varianten und Abwandlungen möglich, die in den Schutzbereich fallen, der durch die Ansprüche definiert ist.

## Patentansprüche

1. Fehlerprotokollierungsverfahren für eine Anlage, mit den folgenden Schritten:
a) Laufende Erfassung (S1) von Prozessdatensätzen der Anlage, wobei die einzelnen Prozessdatensätze jeweils bestimmten Betriebszeitpunkten der Anlage zugeordnet sind und jeweils mehrere Prozessdaten der Anlage enthalten,
b) Detektion (S3, S4, S5) eines möglichen Fehlerzustands der Anlage,
c) Speichern (S2, S7) der derjenigen Prozessdatensätze, die innerhalb einer vorgegebenen zeitlichen Vorlaufzeit vor der Detektion des Fehlerzustands und/oder innerhalb einer vorgegebenen zeitlichen Nachlaufzeit nach der Detektion des Fehlerzustands ermittelt wurden,
d) Erzeugung (S3, S4) einer Fehlerkennung bei einer Detektion eines Fehlerzustands der Anlage,
e) Speichern (S7) der Fehlerkennung
e1) in einer zeitlichen Synchronisierung mit den gespeicherten Prozessdatensätzen und/oder
e2) zusammen mit den zugehörigen Prozessdatensätzen für jeden Fehlerzustand in jeweils einer Fehlerdatei und/oder
e3) zusammen mit denjenigen Prozessdatensätzen, die innerhalb eines vorgegebenen Zeitfensters um den Zeitpunkt der Detektion des Fehlerzustands erfasst wurden,
**dadurch gekennzeichnet**,
f) dass die Anlage eine Beschichtungsanlage ist,
g) dass folgende Prozessdaten der Beschichtungsanlage gespeichert werden:
g1) Bauteildaten, welche die beschichteten Bauteile charakterisieren,
g2) Bedienerdaten, welche die Interaktion einer Bedienungsperson mit der Beschichtungsanlage charakterisieren, und/oder
g3) Anlagendaten, welche die Beschichtungsanlage selbst charakterisieren,
h) dass die Vorlaufzeit und/oder die Nachlaufzeit eine vorgegebene Zeitspanne ist, innerhalb derer eine vorgegebene Anzahl von Bauteilträgern oder zu beschichtenden Bauteilen durch die Beschichtungsanlage gefördert wird, und
i) dass die Speicherung (S2, S7) der Prozessdatensätze und der Fehlerkennung mit einer zeitlichen Auflösung von mindestens 10ms erfolgt.

2. Fehlerprotokollierungsverfahren nach Anspruch 1, **dadurch gekennzeichnet, dass** für jeden Fehlerzustand der Beschichtungsanlage die einzelnen Fehlerkennungen mit den zugehörigen Prozessdatensätzen jeweils in eine eigene Fehlerdatei gespeichert werden.

3. Fehlerprotokollierungsverfahren nach Anspruch einem der vorhergehenden Ansprüche, **dadurch gekennzeichnet,**
a) **dass** die Fehlerkennung eine Zeitmarke (3) ist, die den Fehlerzeitpunkt wiedergibt, und/oder
b) **dass** die Fehlerkennung den Fehlertyp des detektierten Fehlers wiedergibt.

4. Fehlerprotokollierungsverfahren nach einem der vorhergehenden Ansprüche, **dadurch gekennzeichnet, dass**
a) die Vorlaufzeit und/oder die Nachlaufzeit für die Speicherung der Prozessdatensätze mindestens 200ms, 1s, 5s, 10s, 1min, 1h, 1 Tag lang ist oder
b) einer Zeitspanne entspricht, in der mindestens 1 Bauteilträger oder mindestens 10 Bauteilträger durch die Beschichtungsanlage gefördert werden.

5. Fehlerprotokollierungsverfahren nach einem der vorhergehenden Ansprüche, **dadurch gekennzeichnet, dass** folgende α-Prozessdaten der Beschichtungsanlage gespeichert werden:
a) Uhrzeit und/oder
b) Sensordaten, die Messsignale von Sensoren wiedergeben und/oder
c) Farbe des aktuell in der Beschichtungsanlage applizierten Beschichtungsmittels und/oder
d) Farbe des zuvor in der Beschichtungsanlage applizierten Beschichtungsmittels und/oder
e) Identifikationsnummer des aktuell in der Beschichtungsanlage befindlichen Bauteilträgers und/oder
f) Identifikationsnummer des aktuell in der Beschichtungsanlage befindlichen Bauteils, insbesondere einer Karosserie, oder der aktuell in der Beschichtungsanlage befindlichen Bauteile und/oder
g) Typ des aktuell in der Beschichtungsanlage befindlichen Bauteils oder der aktuell in der Beschichtungsanlage befindlichen Bauteile und/oder
h) Identifikationsnummer der aktuell verwendeten Ringleitung der Beschichtungsanlage und/oder
i) Identifikationsnummer der verwendeten Farbe und/oder
j) Drehzahl eines Rotationszerstäubers und/oder
k) Elektrische Aufladungsspannung eines elektrostatischen Applikationsgeräts und/oder
l) Elektrischer Aufladestrom eines elektrostatischen Applikationsgeräts und/oder
m) Aktuell applizierte Beschichtungsmittelmenge und/oder
n) Ausflussmenge der einzelnen Medien, insbesondere Spülmittel, Lösemittel, Lenkluft, Formluft für Flachstrahl, Freihalteluft, Hüllluft, Trocknungsluft, Kühlluft, Turbinenlagerluft, Turbinenantriebsluft und/oder
o) Aktuelle Lenkluftströmung der einzelnen Lenklüfte und/oder
p) Aktueller Lenkluftdruck und/oder
q) Aktuelle Hornluftströmung und/oder aktueller Hornluftdruck und/oder,
r) Aktuelle Antriebsluftströmung und/oder aktueller Antriebsluftdruck und/oder
s) Lackdruck und/oder
t) Luftdruck und alle verfügbaren Sensormesswerte des Luftdrucks
u) Spülmitteldruck und/oder
v) Molchpositionen und/oder
w) Temperaturen in der Beschichtungsanlage und/oder
x) Feuchtigkeit in der Beschichtungsanlage und/oder
y) Status der Lackierkabine, insbesondere Zuluft-Status, Wassauswaschungs-Status, Abluft-Status
z) Füllstände der Beschichtungsanlage und/oder
aa) Schaltstellungen von Ventilen der Beschichtungsanlage und/oder
bb) Position, Stellung, Geschwindigkeit, Beschleunigung und/oder Drehmoment eines Lackierroboters und/oder
cc) Soll/Ist-Abweichung einer oder mehrerer der vorstehend erwähnten Prozessdaten und/oder
dd) Bedienereingaben und/oder
ee) Brush-Daten, Bewegungsprogramm-Nummer des Roboters und/oder
ff) Fördererdaten, insbesondere Inkremente sowie Status des Förderers, und/oder
gg) Trocknerdaten und Trockner-Status und/oder hh) Datenverkehr zwischen den Steuerungsteilen.

6. Fehlerprotokollierungsverfahren nach einem der vorhergehenden Ansprüche,
**gekennzeichnet durch** folgenden Schritt (S11):
Datenfernübertragung der ermittelten Prozessdatensätze und/oder der Fehlerkennung zu einem Wartungsdienst.

7. Fehlerprotokollierungsverfahren nach einem der vorhergehenden Ansprüche, **gekennzeichnet durch** folgende Schritte:
a) Speicherung der Prozessdatensätze und/oder der Fehlerkennung auf einem wechselbaren Massenspeicher,
b) Transport des Massenspeichers mit den gespeicherten Prozessdatensätzen zu einem Wartungsdienst.

8. Fehlerprotokollierungsverfahren nach einem der vorhergehenden Ansprüche, **dadurch gekennzeichnet, dass** die Detektion (S3, S4) des Fehlerzustands der Beschichtungsanlage rechnergesteuert anhand einer Auswertung der erfassten Prozessdatensätze der Beschichtungsanlage erfolgt, und/oder bedienergesteuert durch eine Bedienungsperson erfolgt.

9. Fehlerprotokollierungsverfahren nach Anspruch 8, **dadurch gekennzeichnet, dass** im Rahmen der Auswertung der Prozessdatensätze für die Detektion eines Fehlerzustands die zeitlichen Verläufe der ermittelten Prozessdatensätze mit vorgegebenen Fehlerverläufen verglichen werden.

10. Fehlerprotokollierungsverfahren nach einem der vorhergehenden Ansprüche, **gekennzeichnet durch** folgende Schritte:
a) Auslesen der gespeicherten Fehlerkennung und der zugehörigen Prozessdatensätze,
b) Optische Darstellung der ausgelesenen Fehlerkennung und der zugehörigen Prozessdatensätze auf einem Bildschirm.

11. Fehlerprotokollierungsverfahren nach einem der vorhergehenden Ansprüche, **dadurch gekennzeichnet,**
a) **dass** die gespeicherten Prozessdatensätze auch die räumliche Stellung eines Roboters der Beschichtungsanlage wiedergeben,
b) **dass** bei der optischen Darstellung auch die Stellung des Roboters grafisch auf dem Bildschirm dargestellt wird.

12. Fehlerprotokollierungsverfahren nach einem der vorhergehenden Ansprüche, **dadurch gekennzeichnet,**
a) **dass** in Abhängigkeit von der Fehlerkennung bestimmte Prozessdaten aus den gespeicherten Prozessdatensätzen ausgewählt werden,
b) **dass** nur die ausgewählten Prozessdaten optisch dargestellt werden, um die Fehleranalyse zu erleichtern.

13. Fehlerprotokollierungsverfahren nach einem der vorhergehenden Ansprüche, **gekennzeichnet durch** folgende Schritte:
a) Rechnergesteuerte Bestimmung (S9) möglicher Fehlerursachen und/oder Abhilfemaßnahmen aus der gespeicherten Fehlerkennung und den zugehörigen Prozessdatensätzen,
b) Optische Darstellung (S10) der möglichen Fehlerursachen und/oder Abhilfemaßnahmen auf dem Bildschirm.

14. Fehlerprotokollierungsverfahren nach einem der vorhergehenden Ansprüche, **gekennzeichnet durch** folgenden Schritt:
Unterdrückung der Fehlerdetektion innerhalb eines vorgegebenen Zeitraums nach einer Fehlerdetektion.

15. Datenspeichermedium mit einem darauf gespeicherten Computerprogramm zur Ausführung eines Fehlerprotokollierungsverfahren nach einem der vorhergehenden Ansprüche auf einem Computer.

## Claims

1. An error logging method for a plant with the following steps:
a) Continuous logging (S1) of process data sets of the plant, the individual process data sets each being attributed to certain points in plant operating time and each containing multiple process data of the plant,
b) Detection (S3, S4, S5) of a possible error state of the plant;
c) Storage (S2, S7) of those process data sets which were detected within a specified lead time before detection of the error state and/or within a specified follow-up time after detection of the error state,
d) Generation (S3, S4) of an error code when a plant error state is detected;
e) Storage (S7) of the error code
e1) time-synchronised with the stored process data sets and/or
e2) with the relevant process data sets for each error state in a dedicated error file, and/or
e3) with those process data sets which have been logged within a specified time frame around the time at which the error state was detected,
characterized
f) in that the plant is a coating plant,
g) in that the following coating plant process data are stored:
g1) Component data characteristics of the coated components,
g2) User data, characterising the interaction between an operator and the coating plant, and/or
g3) Plant data characterising the coating plant itself,
h) in that the lead time and/or the follow-up time is a specific period, within which a specific number of skids or components to be coated is conveyed through the coating plant, and
i) in that the storage (S2, S7) of the process data sets and the error code takes place with temporal resolution of at least 10 ms.

2. The error logging method in accordance with claim 1, **characterised in that** the individual error codes and the relevant process data sets for each coating plant error state are each stored in a dedicated error file.

3. The error logging method in accordance with any one of the preceding claims, **characterised in that**
a) the error code is a timestamp (3) which reproduces the time of the error, and/or
b) the error code shows the type of error detected.

4. The error logging method in accordance with any one of the preceding claims, **characterised in that**
a) the lead time and/or follow-up time for storage of the process data sets is at least 200ms, 1s, 5s, 10s, 1min, 1h or 1 day, or
b) corresponds to a period in which at least one skid or at least ten skids are conveyed through the coating plant.

5. The error logging method in accordance with one of the preceding claims, **characterised in that** the following coating plant process data are stored:
a) Time and/or
b) Sensor data, which reproduces the measurement signals from sensors, and/or:
c) Colour of the coating agent currently being applied in the coating plant and/or
d) Colour of the coating agent previously applied in the coating plant, and/or
e) Identification number of the skid currently located in the coating plant and/or
f) Identification number of the component currently located in the coating plant, particularly a body, or the components currently located in the coating plant, and/or
g) Type of component or components currently located in the coating plant, and/or
h) Identification number of the looped main of the coating plant currently in use, and/or
i) Identification number of the colour used, and/or
j) Speed of a rotary atomiser, and/or
k) Electrical charging voltage of an electrostatic application device, and/or
1) Electric charging current of an electrostatic application device, and/or
m) Volume of the coating agent currently being applied, and/or
n) Flow rate of the individual media, particularly flushing agents, solvents, guide air, shroud air for flat spray, knife air, envelope air, drying air, cooling air, turbine bearing air, and/or
o) Current flow of the individual guide air currents, and/or
p) Current guide air pressure, and/or
q) Current horn air flow and/or current horn air pressure, and/or
r) Current driving air flow and/or current driving air pressure, and/or
s) Paint pressure, and/or
t) Air pressure and all available air pressure sensor measurements
u) Flushing agent pressure, and/or
v) Pig positions, and/or
w) Temperatures in the coating plant, and/or
x) Moisture in the coating plant, and/or
y) Paint cabin status, particularly ventilation status, water washout status, extraction status
z) Coating plant filling levels, and/or
aa) Coating plant valve switch positions, and/or
bb) Position, speed, acceleration and/or torque of a painting robot and/or
cc) Target/actual deviation of one or more of the aforementioned process data, and/or
dd) User entries, and/or
ee) Brush data, movement program number of the robot, and/or
ff) Conveyor data, particularly conveyor increments and status, and/or
gg) Dryer data and status, and/or
hh) Exchange of data between the control components.

6. The error logging method in accordance with any one of the preceding claims, **characterised by** the following step (S11): remote transmission of the data sets logged and/or the error code to a maintenance service.

7. The error logging method in accordance with any one of the preceding claims, **characterised by** the following steps:
a) Storage of the process data sets and/or the error code on an interchangeable mass storage medium;
b) Transport of the mass storage medium and the stored process data sets to a maintenance service.

8. The error logging method in accordance with any one of the preceding claims, **characterised in that** detection (S3, S4) of the error state of the coating plant is computer controlled, using analysis of the process data sets of the coating plant, and/or is user-controlled by an operator.

9. The error logging method in accordance with claim 8, **characterised in that** the time curves of the process data sets logged are compared with specified error curves within the scope of analysis of the process data sets for detecting an error state.

10. The error logging method in accordance with any one of the preceding claims, **characterised by** the following steps:
a) Readout of the stored data code and relevant process data sets;
b) Visual display of the read-out error code and relevant process data sets on a monitor.

11. The error logging method in accordance with any one of the preceding claims, **characterised in that**
a) the stored process data sets also reproduce the spatial position of a coating plant robot;
b) the position of the robot is graphically displayed on the screen in the visual display.

12. The error logging method accordance with any one of the preceding claims, **characterised in that**
a) certain process data are selected from the stored process data as a function of the error code;
b) only the selected process data are displayed visually, to facilitate error analysis.

13. The error logging method in accordance with any one of the preceding claims, **characterised by** the following steps:
a) Computer-controlled determination (S9) of possible causes of errors and/or remedial measures from the stored error code and relevant process data sets;
b) Visual display (S10) of possible causes of errors and/or remedial measures on screen.

14. The error logging method in accordance with any one of the preceding claims, **characterised by** the following step:
suppression of error detection within a specific period following error detection.

15. A data storage medium with a computer program for running an error logging method on a computer in accordance with any one of the preceding claims.

## Revendications

1. Procédé de consignation d'erreurs pour une installation, avec les étapes suivantes :
a) relevé en continu (S1) d'ensembles de données de process de l'installation, les différents ensembles de process correspondant chacun à des instants de fonctionnement de l'installation et contenant chacun plusieurs données de process de l'installation,
b) détection (S3, S4, S5) d'un état d'erreur possible de l'installation,
c) enregistrement (S2, S7) des ensembles de données de process qui ont été déterminés dans un temps antérieur prédéterminé avant la détection de l'état d'erreur et/ou dans un temps postérieur prédéterminé après la détection de l'état d'erreur,
d) génération (S3, S4) d'un identifiant d'erreur lors de la détection d'un état d'erreur de l'installation,
e) enregistrement (S7) de l'identifiant d'erreur
e1) dans une synchronisation temporelle avec les ensembles de données de process enregistrés et/ou
e2) conjointement avec les ensembles de données de process pour chaque état d'erreur, chacun dans un fichier d'erreur et/ou
e3) conjointement avec les ensembles de données de process qui ont été relevés dans une fenêtre de temps prédéterminée autour du moment de la détection de l'état d'erreur,
**caractérisé en ce que**
f) l'installation est une installation de revêtement,
g) les données de process suivantes de l'installation de revêtement sont enregistrées :
g1) des données de composants qui caractérisent les composants revêtus,
g2) des données d'utilisateurs qui caractérisent l'interaction d'un opérateur avec l'installation de revêtement et/ou
g3) des données d'installation qui caractérisent l'installation de revêtement elle-même,
h) le temps antérieur et/ou le temps postérieur est un laps de temps prédéterminé à l'intérieur duquel un nombre prédéterminé de supports de composants ou de composants à revêtir est convoyé par l'installation de revêtement et
i) l'enregistrement (S2, S7) des ensembles de données de process et de l'identifiant d'erreur a lieu avec une résolution temporelle d'au moins 10 ms.

2. Procédé de consignation d'erreurs selon la revendication 1, **caractérisé en ce que**, pour chaque état d'erreur de l'installation de revêtement, les différents identifiants d'erreurs sont enregistrés avec les ensembles de données de process correspondants, chacun dans fichier d'erreur différent.

3. Procédé de consignation d'erreurs selon l'une des revendications précédentes, **caractérisé en ce que**
a) l'identifiant d'erreur est un repère temporel (3) qui indique le moment de l'erreur et/ou
b) l'identifiant d'erreur indique le type d'erreur de l'erreur détectée.

4. Procédé de consignation d'erreurs selon l'une des revendications précédentes, **caractérisé en ce que**
a) le temps antérieur et/ou le temps postérieur pour l'enregistrement des ensembles de données de process est long d'au moins 200 ms, 1 s, 5 s, 10 s, 1 min, 1 h, 1 jour ou
b) correspond à un laps de temps dans lequel au moins 1 support de composant ou au moins 10 supports de composants sont convoyés à travers l'installation de revêtement.

5. Procédé de consignation d'erreurs selon l'une des revendications précédentes, **caractérisé en ce que** les données de process suivantes de l'installation de revêtement sont enregistrées :
a) l'heure et/ou
b) les données de capteurs, qui reproduisent les signaux de mesure des capteurs et/ou
c) la couleur du produit de revêtement actuellement appliqué dans l'installation de revêtement et/ou
d) la couleur du produit de revêtement appliqué précédemment dans l'installation de revêtement et/ou
e) le numéro d'identification du support de composant se trouvant actuellement dans l'installation de revêtement et/ou
f) le numéro d'identification du composant, plus particulièrement d'une carrosserie, se trouvant actuellement dans l'installation de revêtement, ou des composants se trouvant actuellement dans l'installation de revêtement et/ou
g) le type du composant se trouvant actuellement dans l'installation de revêtement ou des composants se trouvant actuellement dans l'installation de revêtement et/ou
h) le numéro d'identification de la conduite en circuit fermé actuellement utilisée de l'installation de revêtement et/ou
i) le numéro d'identification de la couleur utilisée et/ou
j) la vitesse de rotation d'un pulvérisateur rotatif et/ou
k) la tension de charge électrique d'un dispositif d'application électrostatique et/ou
l) le courant de charge électrique d'un dispositif d'application électrostatique et/ou
m) la quantité de produit de revêtement actuellement appliquée et/ou
n) la quantité d'évacuation des différents fluides, plus particulièrement les produits de rinçage, les solvants, l'air de guidage, l'air de formage pour un jet plat, l'air de dégagement, l'air d'enveloppe, l'air de séchage, l'air de refroidissement, l'air de palier de turbine, l'air d'entraînement de turbine et/ou
o) le débit d'air de guidage actuel des différents airs de guidage et/ou
p) la pression actuelle d'air de guidage et/ou
q) le débit actuel de l'air de corne et/ou la pression actuelle de l'air de corne et/ou
r) le débit actuel de l'air d'entraînement et/ou la pression actuelle de l'air d'entraînement et/ou
s) la pression de la peinture et/ou
t) la pression de l'air et toutes les valeurs de mesures disponibles des capteurs de la pression d'air
u) la pression du produit de rinçage et/ou
v) les positions des écouvillons et/ou
w) les températures dans l'installation de revêtement et/ou
x) l'humidité dans l'installation de revêtement et/ou
y) l'état de la cabine de peinture, plus particulièrement l'état de l'air d'entrée, l'état de lessivage, l'état de l'air évacué
z) les niveaux de remplissage de l'installation de revêtement et/ou
aa) les positions de commutation des vannes de l'installation de revêtement et/ou
bb) la position, la vitesse, l'accélération et/ou le couple d'un robot de peinture et/ou
cc) l'écart de consigne / réel d'un ou de plusieurs ensembles de données précédemment évoqués et/ou
dd) les entrées des utilisateurs et/ou
ee) les données des brosses, le numéro de programme de mouvement du robot et/ou
ff) les données du convoyeur, plus particulièrement les incréments ainsi que l'état du convoyeur et/ou
gg) les données du dispositif de séchage et l'état du dispositif de séchage et/ou
hh) le trafic de données entre les composants de la commande.

6. Procédé de consignation d'erreurs selon l'une des revendications précédentes, **caractérisé par** l'étape suivante (S11) :
transmission à distance des ensembles de données de process et/ou de l'identifiant d'erreur déterminés à un service de maintenance.

7. Procédé de consignation d'erreurs selon l'une des revendications précédentes, **caractérisé par** les étapes suivantes :
a) enregistrement des ensembles de données de process et/ou de l'identifiant d'erreur sur une mémoire de masse interchangeable,
b) transport de la mémoire de masse avec les ensembles de données enregistrés vers un service de maintenance.

8. Procédé de consignation d'erreurs selon l'une des revendications précédentes, **caractérisé en ce que** la détection (S3, S4) de l'état d'erreur de l'installation de revêtement est effectuée de manière assistée par ordinateur à l'aide d'une analyse des ensembles de données relevés de l'installation de revêtement et/ou de manière pilotée par l'utilisateur par un opérateur.

9. Procédé de consignation d'erreur selon la revendication 8, **caractérisé en ce que**, dans le cadre de l'analyse des ensembles de données de process, pour la détection d'un état d'erreur, les déroulements temporels des ensembles de données déterminés sont comparés avec des déroulements d'erreurs prédéterminés.

10. Procédé de consignation d'erreurs selon l'une des revendications précédentes, **caractérisé par** les étapes suivantes :
a) lecture de l'identifiant d'erreur enregistré et des ensembles de données de process correspondants,
b) représentation graphique de l'identifiant d'erreur lu et des ensembles de données de process correspondants sur un écran.

11. Procédé de consignation d'erreurs selon l'une des revendications précédentes, **caractérisé en ce que**
a) les ensembles de données de process enregistrés représentent également la position dans l'espace d'un robot de l'installation de revêtement,
b) lors de la représentation graphique, la position du robot est également représentée graphiquement sur l'écran.

12. Procédé de consignation d'erreurs selon l'une des revendications précédentes, **caractérisé en ce que**
a) en fonction de l'identifiant d'erreur, certaines données de process sont sélectionnés parmi les ensembles de données de process enregistrés,
b) seules les données de process sélectionnées sont représentées graphiquement, afin de faciliter l'analyse des erreurs.

13. Procédé de consignation d'erreurs selon l'une des revendications précédentes, **caractérisé par** les étapes suivantes :
a) détermination assistée par ordinateur (S9) des causes possibles des erreurs et/ou des mesures correctives à partir de l'identifiant d'erreur enregistré et des ensembles de données de process correspondants,
b) représentation graphique (S10) des causes possibles d'erreurs et/ou des mesures correctives sur l'écran.

14. Procédé de consignation d'erreurs selon l'une des revendications précédentes, **caractérisé par** l'étape suivante :
inhibition de la détection d'erreurs à l'intérieur d'un laps de temps prédéterminé après une détection d'erreur.

15. Support d'enregistrement de données avec un programme informatique enregistré dessus, pour l'exécution d'un procédé de consignation d'erreurs selon l'une des revendications précédentes sur un ordinateur.
